Europäisches Patentamt

European Patent Office

Office européen des brevets

(11) Numéro de publication: **0 267 492**
**A1**

## (12) DEMANDE DE BREVET EUROPEEN

(21) Numéro de dépôt: 87115783.0

(22) Date de dépôt: 27.10.87

(51) Int. Cl.⁴ **G01N 3/04**

(30) Priorité: 30.10.86 LU 86641

(43) Date de publication de la demande:
18.05.88 Bulletin 88/20

(84) Etats contractants désignés:
**BE DE ES FR GB GR IT LU NL**

(71) Demandeur: **COMMUNAUTE EUROPEENNE DE L'ENERGIE ATOMIQUE (EURATOM)**
**Bâtiment Jean Monnet-DG XIII/A1 Plateau du Kirchberg**
**L-2920 Luxembourg(LU)**

(72) Inventeur: **Albertini, Carlo**
**Via dei Pini 17**
**I-21020 Ispra(IT)**
Inventeur: **Montagnani, Mario**
**Via G.Rossi 5**
**Bologna(IT)**
Inventeur: **Prosdocimi, Gianluigi**
**Via Bossi 15**
**Azzare(IT)**

(74) Mandataire: **Weinmiller, Jürgen**
**Lennéstrasse 9 Postfach 24**
**D-8133 Feldafing(DE)**

(54) **Dispositif d'accouplement entre une éprouvette longititudinale et une tête de traction.**

(57) L'invention concerne un dispositif d'accouplement entre une éprouvette longitudinale métallique (1) et une tête de traction (4, 5), l'éprouvette devant être soumise à des essais de traction et comportant une section rectangulaire aplatie avec deux grandes surfaces (6, 7) et deux petites surfaces (8, 9).

Selon l'invention, l'extrémité (2, 3) de l'éprouvette a une forme générale de flèche telle que lesdites deux petites surfaces (8, 9) y sont inclinées l'une vers l'autre, alors que les deux grandes surfaces restent parallèles entre elles, que lesdites surfaces inclinées sont munies de rainures (13) parallèles de section en dent de scie et s'étendant perpendiculairement à l'axe de l'éprouvette, les dents étant inclinées dans le même sens que lesdites surfaces, et que la tête de traction comprend une contrepièce rigide (11) de forme complémentaire à celle de l'extrémité en flèche de l'éprouvette (1), la longueur des rainures de cette contrepièce étant au moins égale à celle des rainures (13) sur l'éprouvette (1).

FIG. 1

# DISPOSITIF D'ACCOUPLEMENT ENTRE UNE EPROUVETTE LONGITUDINALE ET UNE TETE DE TRACTION

L'invention concerne un dispositif d'accouplement entre une éprouvette longitudinale métallique et une tête de traction, l'éprouvette devant être soumise à des essais de traction et comportant une section rectangulaire aplatie avec deux grandes surfaces et deux petites surfaces.

Lors des essais de traction, une éprouvette longitudinale doit être accouplée de façon précise, réproductible et détachable sur une tête de traction. En outre, cet accouplement ne doit pas induire des contraintes de flexion ou une répartition inhomogène des forces.

Dans le périodique "Review of Scientific Instruments", vol. 47, N° 5, mai 1976, pages 631 et 632, on décrit une méthode de fixation d'une éprouvette dans une tête de traction. La tête de traction est composée de deux plaques parallèles entre lesquelles l'extrémité de l'éprouvette est coincée à l'aide de vis qui serrent les deux plaques l'une contre l'autre. Les surfaces de contact entre l'éprouvette et la tête de traction sont rainurées perpendiculairement à l'axe de traction. La force de traction est donc transférée par les parois latérales des rainures et se concentre dans l'éprouvette à proximité des fonds des rainures. Une telle méthode ne s'applique donc qu'à des éprouvettes minces pour lesquelles l'épaisseur ne dépasse par exemple pas dix fois la profondeur des rainures. Un autre inconvénient de cette méthode est que l'accouplement et le désaccouplement d'une éprouvette exige la manipulation de plusieurs vis, ce qui est gênant surtout pour des tests de série ou des essais sous irradiation nécessitant une manipulation à distance.

L'invention a donc pour but de concevoir un dispositif d'accouplement entre une éprouvette longitudinale métallique et une tête de traction se distinguant des méthodes connues par une manipulation aisée et une répartition homogène des forces de traction dans l'éprouvette. En outre, le dispositif d'accouplement s'applique particulièrement bien à des éprouvettes épaisses et même à des éprouvettes d'épaisseurs différentes sans qu'il faille adapter le dispositif à chaque épaisseur particulière.

Ce but est atteint selon l'invention par le dispositif tel qu'il est caractérisé dans la revendication 1. En ce qui concerne des modes de réalisation préférés, référence est faite aux sous-revendications.

L'invention sera décrite ci-après plus en détail à l'aide d'un exemple de réalisation et des dessins.

La fig. 1 montre une vue d'une éprouvette munie de deux dispositifs d'accouplement selon l'invention.

Fig. 2 représente une vue orthogonale sur l'un des dispositifs selon la fig. 1.

Fig. 3 représente en échelle aggrandie une vue de face d'une tête de traction de ce même dispositif avant son accouplement à une éprouvette.

Une éprouvette métallique longitudinale 1 doit être accouplée par ses deux extrémités 2 et 3 à deux têtes de traction 4 et 5 pour être soumise à des forces calibrées de traction soit statiquement, soit dynamiquement. L'éprouvette a une section rectangulaire aplatie avec deux grandes surfaces 6 et 7 et deux petites surfaces 8 et 9. L'essai de traction peut porter à travers une soudure 10 réunissant les deux parties de l'éprouvette sur le matériau même de l'éprouvette.

La ligne de soudure 10 doit être beaucoup plus résistante à la traction que le matériau de l'éprouvette pour ne pas influencer l'essai. Les deux extrémités 2 et 3 peuvent être identiques ou non. Les extrémités peuvent venir d'une seule pièce avec l'éprouvette 1 ou être soudées à celle-ci, par exemple le long de la ligne de soudure 10. La pièce 2, avec une instrumentation convenable, peut être utilisée comme dynamomètre après calibration.

Le dispositif d'accouplement selon l'invention comporte d'une part une extrémité telle que 2 ou 3 solidaire de l'éprouvette 1 et une contrepièce 11 ou 12 solidaire respectivement de l'une des têtes de traction 4 et 5.

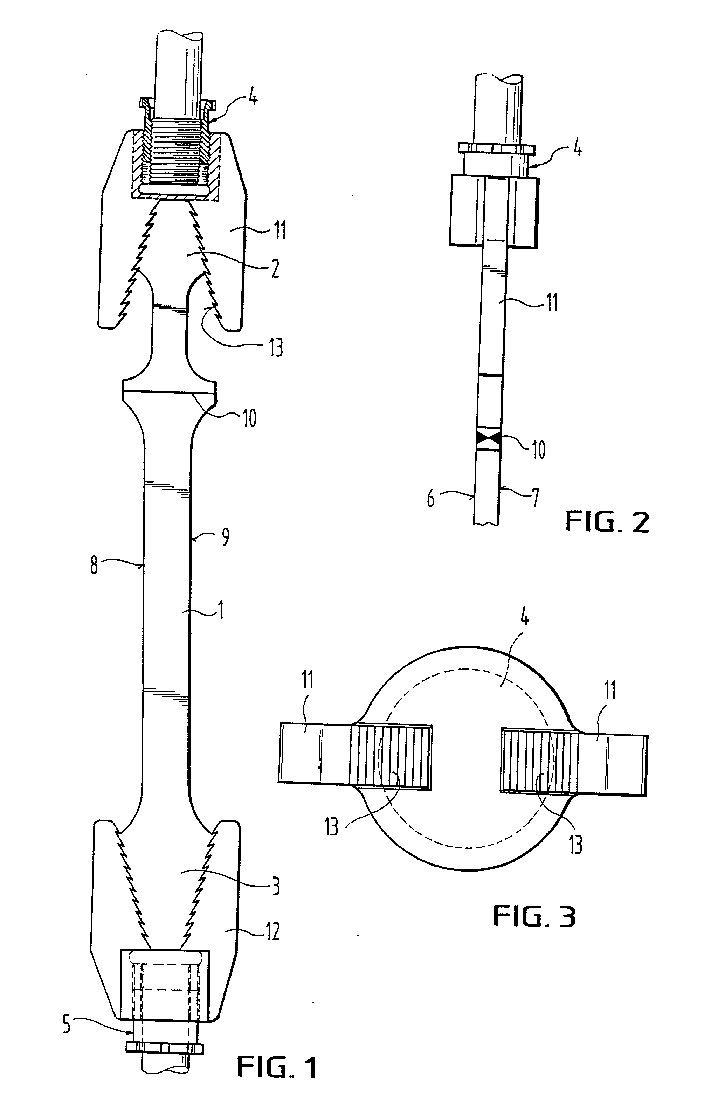

Les deux petites surfaces 8 et 9 de l'extrémité 2 ou 3 sont inclinées l'une vers l'autre , ce qui donne à l'extrémité dans la représentation de la fig. 1 la forme d'une flèche, alors que les deux grandes surfaces 6 et 7 restent parallèles entre elles. Les surfaces inclinées sont munies de rainures 13 parallèles et perpendiculaires à l'axe de l'éprouvette. Les parois de ces rainures sont inclinées par rapport à l'axe de l'éprouvette selon le même sens d'inclinaison que la flèche elle-même. La vue en profil de ces rainures 13 montre donc une ligne en dents de scie. L'extrémité de la flèche est tronquée au bout. La contrepièce 11 ou 12 a une forme complémentaire à celle de l'extrémité, de sorte que les deux peuvent être accouplées par un mouvement relatif perpendiculaire au plan de la fig. 1. La zone rainurée de la contrepièce 11 peut être plus longue que la zone rainurée de l'extrémité 2 pour pouvoir recevoir des extrémités de tailles différentes telle que par exemple l'extrémité 3.

Les surfaces des parois des rainures 13 doivent être polies et rectifiées et les arêtes extérieures des rainures doivent être arrondies pour faciliter le glissement relatif de l'extrémité dans la contrepièce.

On voit aisément que la contrepièce peut recevoir des extrémités d'éprouvettes de différentes épaisseurs. A ces fins, on prévoit une longueur des rainures 13 dans la contrepièce, qui correspond à l'épaisseur la plus grande des éprouvettes à considérer.

Grâce à la forme en flèche de l'extrémité 2 ou 3, le dispositif selon l'invention répartit les forces de traction de façon homogène sur toute la section utile de l'éprouvette sans créer des pointes de contrainte. Grâce aux rainures en dents de scie, les forces de traction n'entraînent aucune contrainte de flexion sur l'éprouvette qui pourrait falsifier les essais. Les forces de traction appliquées ont tendance à serrer encore les deux bras dentés de la contrepièce sur l'extrémité de l'éprouvette, ce qui exclut tout danger d'un lâchement intempestif de l'éprouvette au niveau du dispositif d'accouplement.

Dans une réalisation particulière, le dispositif a les caractéristiques suivantes :

Longueur de la zone rainurée de la contrepièce : 200 mm

Nombre de rainures dans cette zone : 10

Angles d'inclinaison des parois des rainures par rapport à l'axe longitudinale : 35 et 60° respectivement

Angle au sommet de la flèche : 30°

Matériaux de la contrepièce et des extrémités de l'éprouvette : acier

Longueur de l'éprouvette : 1050 mm

Force de traction maximale lors des essais : 230 N

L'invention n'est pas limitée en détail à l'exemple de réalisation représenté sur les figures. On peut en particulier n'utiliser le dispositif selon l'invention qu'à une seule extrémité de l'éprouvette ou réaliser les deux dispositifs d'accouplement de façon identique, par exemple conformément à la partie supérieure de la fig. 1.

## Revendications

1. Dispositif d'accouplement entre une éprouvette longitudinale métallique (1) et une tête de traction (4, 5), l'éprouvette devant être soumise à des essais de traction et comportant une section rectangulaire aplatie avec deux grandes surfaces (6, 7) et deux petites surfaces (8, 9), caractérisé en ce

-que l'extrémité (2, 3) de l'éprouvette (1) a une forme générale de flèche telle que lesdites deux petites surfaces (8, 9) y sont inclinés l'une vers l'autre, alors que les deux grandes surfaces (6, 7) restent parallèles entre elles,

-que lesdites surfaces inclinées sont munies de rainures (13) parallèles de section en dent de scie et s'étendant perpendiculairement à l'axe de l'éprouvette. les dents étant inclinées dans le même sens que lesdites surfaces,

-et que la tête de traction comprend une contrepièce rigide (11) de forme complémentaire à celle de l'extrémité en flèche de l'éprouvette, la longueur des rainures (13) de cette contrepièce étant au moins égale à celle des rainures sur l'éprouvette (1).

2. Dispositif selon la revendication 1, caractérisé en ce que la hauteur de la zone rainurée (13) de la contrepièce en direction longitudinale est supérieure à la hauteur correspondante de l'extrémité en flèche de l'éprouvette.

3. Dispositif selon l'une des revendications précédentes, caractérisé en ce que l'angle au sommet de la flèche est copris entre 20 et 45°, de préférence choisi aux environs de 30°.

4. Dispositif selon l'une des revendications précédentes, caractérisé en ce que toutes les parois des rainures (13) sont inclinées selon le même sens qui est celui des surfaces de la flèche.

5. Dispositif selon l'une des revendications précédentes, caractérisé en ce que le sommet de la flèche est tronqué.

FIG. 1

FIG. 2

FIG. 3

Office européen
des brevets

RAPPORT DE RECHERCHE EUROPEENNE

Numero de la demande

EP  87 11 5783

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | REVIEW OF SCIENTIFIC INSTRUMENTS, vol. 47, no. 5, maî 1976, pages 631-632, New York, US; J.H. VAN DER KUUR et al.: "New method of gripping hard, thin, flat tensile specimens" * En entier * --- | 1 | G 01 N  3/04 |
| A | DE-A-3 420 717  (A.C. BETSCHART) * Page 1; figure 1 * ----- | 1 | |

DOMAINES TECHNIQUES RECHERCHES (Int. Cl.4)

G 01 N   3/00

**Le présent rapport a été établi pour toutes les revendications**

| Lieu de la recherche | Date d'achèvement de la recherche | Examinateur |
|---|---|---|
| LA HAYE | 05-02-1988 | ANTHONY R.G. |